# FASCICULE DE BREVET EUROPEEN

(11) **EP 1 154 618 B1**
(45) Date de publication et mention de la délivrance du brevet: **23.08.2006**
(21) Numéro de dépôt: 01401135.7
(22) Date de dépôt: 03.05.2001
(51) Int. Cl.: H04M 1/19, H04M 1/60

(54) **Téléphone portable à atténuation de bruit environnant**
Mobiltelefon mit Unterdrückung des Hintergrundgeräusches
Mobile telephone with surrounding noise attenuation

(30) Priorité: 11.05.2000 FR 0006003
(43) Date de publication de la demande: 14.11.2001
(73) Titulaire: Sagem Communication, 75015 Paris (FR)
(72) Inventeur: Housni, Jamal, 92400 Courbevoie (FR)
(74) Mandataire: Fruchard, Guy

(56) Documents cités:
- EP-A- 0 596 623
- EP-A- 0 661 903
- DE-A- 19 852 805
- US-A- 4 829 565
- PATENT ABSTRACTS OF JAPAN vol. 2000, no. 06, 22 septembre 2000 (2000-09-22) & JP 2000 069127 A (MATSUSHITA ELECTRIC IND CO LTD), 3 mars 2000 (2000-03-03)

## Description

La présente invention concerne un téléphone portable à atténuation de bruit environnant.

On connaît des dispositifs portables, notamment des casques, équipés d'un dispositif antibruit actif destiné à compenser le bruit environnant en envoyant dans l'écouteur du casque un signal en opposition de phase avec un signal représentatif du bruit environnant. Le signal représentatif est prélevé au moyen d'un microphone antibruit spécialement dédié à cette fonction ou au moyen d'un filtre d'extraction monté en parallèle sur la sortie d'un microphone de parole associé au casque. Dans un cas comme dans l'autre le microphone de capture du bruit environnant est disposé d'une façon particulière qui n'est pas transposable à un téléphone portable. On connaît également, notamment du document EP-A-661 903, un téléphone portable dans lequel un découplage entre le bruit environnant et le signal utile diffusé par l'écouteur est assuré en prévoyant un premier microphone antibruit adjacent à l'écouteur, un second microphone antibruit débouchant sur une face opposée à l'écouteur. Un tel dispositif est complexe est onéreux.

Selon l'invention on propose un téléphone portable comportant un boîtier équipé d'une antenne et percé sur une face d'ouvertures de communication avec un microphone de parole et un écouteur, et un microphone antibruit relié à l'écouteur par l'intermédiaire d'un dispositif antibruit actif, le microphone antibruit étant associé à au moins une première ouverture séparée des ouvertures de communication du microphone de parole et de l'écouteur, et le microphone antibruit étant un microphone directif dirigé vers l'ouverture associée.

Ainsi, même lorsque le microphone antibruit est disposé à proximité de l'écouteur du téléphone portable, les signaux de parole dans l'écouteur ou les signaux de parole de l'utilisateur sont perçus par le microphone antibruit avec une forte atténuation de sorte que le dispositif antibruit effectue seulement une atténuation du bruit ambiant sans atténuer les signaux utiles à la conversation tout en comprenant un seul microphone antibruit.

Selon un aspect avantageux de l'invention, l'ouverture associée au microphone antibruit débouche dans un logement d'un bloc batterie monté dans le boîtier. Ainsi, la fente qui sépare le bloc batterie de son logement permet le passage du bruit environnant sur tout le pourtour de la fente de sorte qu'il existe un risque très minime que l'intégralité de cette fente soit recouverte par la main de l'utilisateur.

D'autres caractéristiques et avantages de l'invention apparaîtront à la lecture de la description qui suit d'un mode de réalisation particulier non limitatif en relation avec les figures ci-jointes parmi lesquelles :

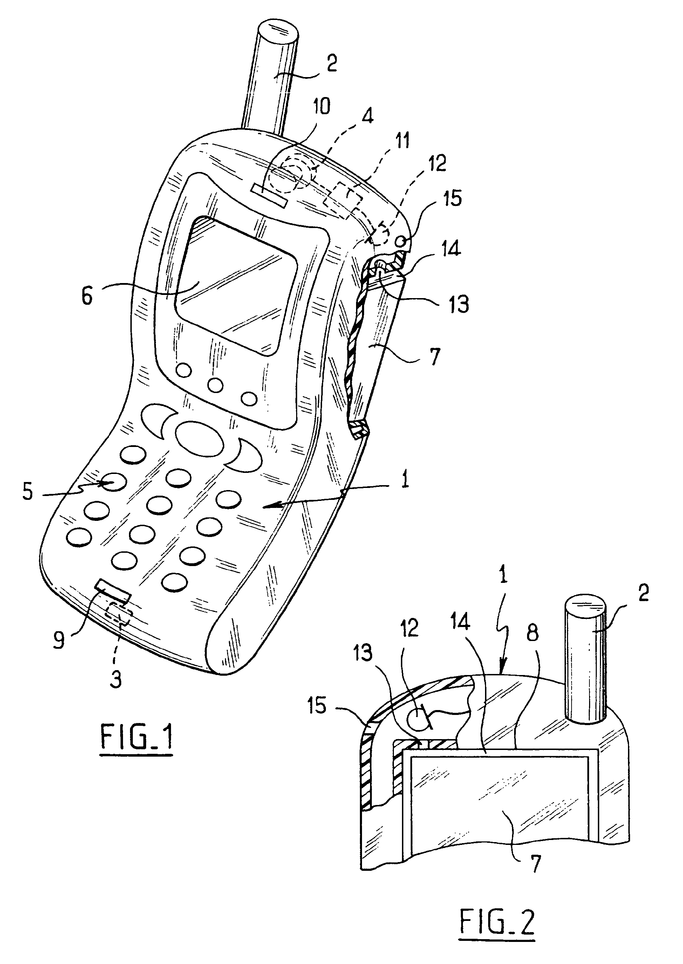

- la figure 1 est une vue en perspective partiellement écorchée d'un téléphone portable selon l'invention,
- la figure 2 est une vue partielle, partiellement écorchée d'une vue de dos du téléphone selon l'invention.

En référence aux figures, le téléphone portable selon l'invention comporte de façon connue en soi un boîtier 1 équipé d'une antenne 2, d'un microphone de parole 3, d'un écouteur 4, d'un clavier 5 et d'un écran de visualisation 6 reliés à une unité de traitement non représentée permettant l'établissement d'une communication avec un réseau cellulaire et alimentée à cet effet par un bloc batterie 7 monté dans un logement 8 du boîtier à l'arrière de celui-ci.

Sur sa face avant le boîtier 1 comporte également de façon connue en soi une ouverture de communication 9 associée au microphone de parole 3 et une ouverture de communication 10 associée à l'écouteur 4.

Par ailleurs l'écouteur 4 est relié par l'intermédiaire d'un dispositif antibruit actif 11 à un microphone antibruit 12 destiné à capter le bruit environnant.

Selon le mode de réalisation préféré de l'invention, le microphone antibruit 12 est un microphone directif dirigé vers une ouverture 13 réalisée dans une paroi du logement 8 du bloc de batterie 7 adjacente à l'écouteur 4, en un point de cette paroi éloigné de l'antenne 2. L'ouverture 13 débouche ainsi sur la face arrière du boîtier 1 par l'intermédiaire de la fente 14 séparant le bloc batterie 7 de son logement 8.

Dans le mode de réalisation préféré illustré, le boîtier comporte en outre une seconde ouverture 15 associée au microphone antibruit 12, réalisée sur le côté du boîtier opposé à l'antenne 2. Ainsi, en supposant que la fente 14 soit entièrement recouverte par la main de l'utilisateur et empêche une capture du bruit environnant par le microphone antibruit 12, l'ouverture 15 permet de capter ce bruit environnant et de traiter celui-ci.

Bien entendu, l'invention n'est pas limitée au mode de réalisation particulier décrit et on peut y apporter des variantes de réalisation sans sortir du cadre de l'invention tel que défini par les revendications.

En particulier, bien que l'invention ait été décrite en relation avec un boîtier comportant deux ouvertures associées au microphone antibruit 12, on peut prévoir une seule ouverture ou au contraire augmenter le nombre d'ouvertures pour assurer une capture du bruit environnant quelle que soit la position de la main de l'utilisateur sur le téléphone portable.

Bien que l'invention ait été illustrée avec un microphone antibruit disposé à l'intérieur du boîtier 1, on peut prévoir de disposer le microphone antibruit ainsi que tout ou partie du dispositif antibruit actif dans le bloc batterie 7 en réalisant dans celui-ci une ouverture débouchant dans la fente 8. Dans ce cas l'ouverture associée au microphone antibruit sera de préférence réalisée dans la partie supérieure du bloc batterie afin de prélever le bruit environnant en un point proche de l'écouteur de façon que le signal antibruit émis par le dispositif antibruit actif soit en opposition de phase avec le bruit environnant perçu au niveau de l'écouteur.

A ce propos on notera que la disposition de l'ouverture 13 en un point éloigné de l'antenne 2 tout en étant adjacent à l'écouteur 4 permet d'améliorer les performances du dispositif antibruit actif en évitant de traiter dans le dispositif antibruit actif les signaux émis par l'antenne 2.

En relation avec le microphone antibruit on peut également prévoir des ouvertures débouchant directement sur la face arrière du boîtier 1.

On peut également prévoir un haut-parleur additionnel pouvant servir à la diffusion d'un signal antibruit actif et fournissant une écoute amplifiée, en particulier dans le cas d'une utilisation en mains libres dans une enceinte de volume limité telle qu'un bureau ou un véhicule.

## Revendications

1. Téléphone portable comportant un boîtier (1) équipé d'une antenne (2) et percé sur une face d'ouvertures (9, 10) de communication avec un microphone de parole (3) et un écouteur (4), et un microphone antibruit (12) relié à l'écouteur (4) par l'intermédiaire d'un dispositif antibruit actif (11), le microphone antibruit (12) étant associé à au moins une première ouverture séparée des ouvertures de communication du microphone de parole et de l'écouteur, **caractérisé en ce que** le microphone antibruit (12) est un microphone directif dirigé vers l'ouverture associée.

2. Téléphone portable selon la revendication 1, **caractérisé en ce que** l'ouverture (13) associée au microphone antibruit (12) débouche en un point du boîtier éloigné de l'antenne (2).

3. Téléphone portable selon la revendication 1, **caractérisé en ce que** l'ouverture (13) associée au microphone antibruit (12) débouche dans un logement (8) d'un bloc batterie (7) monté dans le boîtier (1).

4. Téléphone portable selon la revendication 1, **caractérisé en ce que** le microphone antibruit (12) est associé à au moins une deuxième ouverture (15) espacée de la première ouverture (13).

5. Téléphone portable selon la revendication 4, **caractérisé en ce que** la deuxième ouverture (15) débouche sur un côté du boîtier opposé à l'antenne (2).

## Claims

1. A portable telephone comprising a case (1) fitted with an antenna (2) and pierced by communications openings (9, 10) in one face associated with a speech microphone (3) and with an earpiece (4), and an anti-noise microphone (12) connected to the earpiece (4) via an active anti-noise circuit (11), the anti-noise microphone (12) being associated with at least one opening that is separate from the communications openings of the speech microphone and of the earpiece, the portable telephone being **characterized in that** the anti-noise microphone (12) is a directional microphone directed towards the associated opening.

2. A portable telephone according to claim 1, **characterized in that** the opening (13) associated with the anti-noise microphone (12) opens out through a point of the case that is remote from the antenna (2).

3. A portable telephone according to claim 1, **characterized in that** the opening (13) associated with the anti-noise microphone (12) opens out into a housing (8) for a battery unit (7) mounted in the case (1).

4. A portable telephone according to claim 1, **characterized in that** the anti-noise microphone (12) is associated with at least one second opening (15) spaced apart from the first opening (13).

5. A portable telephone according to claim 4, **characterized in that** the second opening (15) opens out through a side of the case remote from the antenna (2).

## Patentansprüche

1. Mobiltelefon, umfassend ein Gehäuse (1), das mit einer Antenne (2) ausgestattet und auf einer Seite von Öffnungen (9, 10) zur Kommunikation mit einem Sprechmikrophon (3) und einem Hörer (4) durchsetzt ist, und ein Geräuschunterdrückungs-Mikrophon (12), das mit dem Hörer (4) über eine aktive Vorrichtung (11) zur Geräuschunterdrückung verbunden ist, wobei das Geräuschunterdrückungs-Mikrophon (12) mindestens einer ersten Öffnung zugeordnet ist, die von den Kommunikationsöffnungen für das Sprechmikrophon und den Hörer getrennt ist, **dadurch gekennzeichnet, dass** das Geräuschunterdrückungs-Mikrophon (12) ein Richtungsmikrophon ist, das zur dazugehörigen Öffnung gerichtet ist.

2. Mobiltelefon nach Anspruch 1, **dadurch gekennzeichnet, dass** die dem Geräuschunterdrückungs-Mikrophon (12) zugeordnete Öffnung (13) an einer von der Antenne (2) entfernten Stelle des Gehäuses mündet.

3. Mobiltelefon nach Anspruch 1, **dadurch gekennzeichnet, dass** die dem Geräuschunterdrückungs-Mikrophon (12) zugeordnete Öffnung (13) in einer Aufnahme (8) für eine Blockbatterie (7) mündet, die in dem Gehäuse (1) angebracht ist.

4. Mobiltelefon nach Anspruch 1, **dadurch gekennzeichnet, dass** das Geräuschunterdrückungs-Mikrophon (12) mindestens einer zweiten Öffnung (15) zugeordnet ist, die zur ersten Öffnung (13) beabstandet ist.

5. Mobiltelefon nach Anspruch 4, **dadurch gekennzeichnet, dass** die zweite Öffnung (15) an einer der Antenne (2) entgegengesetzten Seite des Gehäuses mündet.
